# EUROPÄISCHE PATENTSCHRIFT

(11) **EP 1 816 038 B1**
(45) Veröffentlichungstag und Bekanntmachung des Hinweises auf die Patenterteilung: **14.05.2008**
(21) Anmeldenummer: 06001705.0
(22) Anmeldetag: 27.01.2006
(51) Int. Cl.: B60R 21/233

(54) **Luftsack für ein Kraftfahrzeug**
Airbag for a vehicle
Coussin gonflable pour véhicule automobile

(43) Veröffentlichungstag der Anmeldung: 08.08.2007
(73) Patentinhaber: Delphi Technologies, Inc., Troy, MI 48007 (US)
(72) Erfinder: Kleipoedssus, Ingo, 42549 Velbert (DE); Maiwald, Helmut, 51515 Kürten (DE)
(74) Vertreter: Manitz, Finsterwald & Partner GbR

(56) Entgegenhaltungen:
- WO-A-03/002488
- WO-A-20/06000800
- US-B1- 6 325 409
- US-B1- 6 450 529

## Beschreibung

Die Erfindung betrifft einen Luftsack für ein Kraftfahrzeug mit mehreren Luftsackkammern und einem Gaszuführkanal zum Zuführen von Gas zu den Luftsackkammern.

Bei einem bekannten Luftsack dieser Art sind die Luftsackkammern so miteinander verbunden, dass ein zum Aufblasen des Luftsacks durch einen Gasgenerator freigesetztes Gas von einer Kammer in die nächste bzw. zwischen den Kammern hin- und herströmen kann. Dadurch verbinden sich die Kammern zu einem gasgefüllten Raum, dessen Gesamtvolumen wesentlich größer als das Volumen der einzelnen Kammern ist.

Als problematisch erweist sich bei einem derartigen Luftsack, dass bei einem Eindrücken des aufgeblasenen Luftsacks durch ein Körperteil eines bei einem Unfall zu schützenden Fahrzeuginsassens aufgrund des vergleichsweise großen Volumens des gasgefüllten Raumes lediglich ein relativ geringer Gegendruck in dem gasgefüllten Raum aufgebaut wird. Das auf den Luftsack auftreffende Körperteil kann somit vergleichsweise tief in den Luftsack eindringen, d.h. der aufgeblasene Luftsack weist eine relativ geringe Federkonstante auf.

Die Schutzwirkung des Luftsacks kann dadurch verbessert werden, dass ein ausreichend hoher Gasdruck in dem gasgefüllten Raum erzeugt und über einen vorbestimmten Zeitraum aufrechterhalten wird. Dabei ist der Zeitraum, über den der gewünschte Gasdruck in dem aufgeblasenen Luftsack aufrechterhalten wird, insbesondere dafür maßgebend, wie gut die Schutzwirkung des Luftsacks im Falle eines zweiten Fahrzeugaufpralls und/ oder -überschlags ist, welcher auf den zum Aufblasen des Luftsacks führenden ersten Aufprall bzw. Überschlag folgt.

Um ein signifikantes Entweichen von Gas aus dem aufgeblasenen Luftsack und den damit einhergehenden Druckabfall in dem Luftsack möglichst lange zu verhindern, werden die Nähte des Luftsacks deshalb in aufwendiger Weise abgedichtet, beispielsweise durch das Versehen der Luftsacknähte mit einer Silikondichtung. Dadurch ist der wirtschaftliche Aufwand zur Herstellung des Luftsacks jedoch erheblich erhöht.

Ein Luftsack gemäß dem Oberbegriff des Anspruchs 1 ist aus der WO-A-03/002488 bekannt.

Der Erfindung liegt die Aufgabe zugrunde, einen Luftsack für ein Kraftfahrzeug zu schaffen, welcher einfacher und kostengünstiger herstellbar ist und gleichzeitig einen verbesserten Fahrzeuginsassenschutz gewährleistet.

Zur Lösung der Aufgabe ist ein Luftsack mit den Merkmalen des Anspruchs 1 vorgesehen.

Der erfindungsgemäße Luftsack umfasst mehrere zumindest annähernd gasdicht voneinander getrennte Luftsackkammern und einen Gaszuführkanal zum Zuführen von Gas zu den Luftsackkammern, wobei jede Luftsackkammer durch eine Zuführöffnung mit dem Gaszuführkanal verbunden ist, welche sich selbsttätig verschließt, wenn der Gasdruck in der Luftsackkammer den Gasdruck in dem Gaszuführkanal übersteigt.

Die zumindest annähernd gasdichte Trennung der Luftsackkammern voneinander bedeutet, dass bei einem Aufblasen des Luftsacks zumindest während eines für einen wirksamen Fahrzeuginsassenschutz relevanten Zeitraums nach der Befüllung der Luftsackkammern mit Gas kein wesentlicher Gasaustausch zwischen den Luftsackkammern stattfindet und insbesondere bei einer Beaufschlagung einer Luftsackkammer durch ein Körperteil eines Fahrzeuginsassens keine die Schutzwirkung des Luftsacks beeinträchtigende Menge an Gas von der beaufschlagten Luftsackkammer in eine benachbarte Luftsackkammer entweichen kann.

Der erfindungsgemäße Luftsack umfasst also mehrere separate Luftsackkammern, die im Vergleich zu der Gesamtgröße des Luftsacks jeweils ein geringes Volumen aufweisen. Aufgrund ihres relativ geringen Volumens führt das Eindrücken einer mit Gas gefüllten Luftsackkammer, beispielsweise durch ein Körperteil eines zu schützenden Fahrzeuginsassens, zu einem erhöhten Anstieg des Gasdrucks in der Luftsackkammer. Es baut sich mit anderen Worten ein erhöhter Gegendruck in der Luftsackkammer auf, wodurch ein tieferes Eindringen des Körperteils in den Luftsack verhindert wird. Jede einzelne gasgefüllte Luftsackkammer weist gewissermaßen also eine im Vergleich zu einem großvolumigen Raum erhöhte Federkonstante auf, so dass durch den erfindungsgemäßen Luftsack im Ergebnis ein verbesserter Insassenschutz erreicht wird.

Zur Befüllung jeder Luftsackkammer mit Gas ist jeweils eine Zuführöffnung vorgesehen, welche die jeweilige Luftsackkammer mit einem Gaszuführkanal verbindet. Die Zuführöffnung jeder Kammer ist erfindungsgemäß so ausgebildet, dass sie sich selbsttätig verschließt, wenn der Gasdruck in der zughörigen Luftsackkammer den Gasdruck in dem Gaszuführkanal übersteigt.

Gas kann also aus dem Gaszuführkanal in die Luftsackkammern einströmen, solange der Gasdruck in dem Gaszuführkanal größer als in den Luftsackkammern ist, beispielsweise also während eines Aufblasvorgangs.

Wird jedoch eine der Luftsackkammern eingedrückt, beispielsweise durch ein Körperteil eines durch den Luftsack zu schützenden Fahrzeuginsassens, steigt der Gasdruck in der Luftsackkammer an. Sobald der Gasdruck in der betreffenden Luftsackkammer größer als der Gasdruck in dem Gaszuführkanal ist, verschließt sich die Zuführöffnung, wodurch ein Entweichen einer die Schutzwirkung des Luftsacks beeinträchtigenden Menge von Gas aus der Luftsackkammer in den Zuführkanal verhindert wird.

Die Zuführöffnung erfüllt gewissermaßen also die Funktion eines Rückschlagventils, welches im Falle einer Beaufschlagung der zugehörigen Luftsackkammer durch einen zu schützenden Fahrzeuginsassen einen unerwünschten Austritt von Gas aus der Luftsackkammer verhindert.

Erfindungsgemäß ist jede Zuführöffnung in einer die jeweilige Luftsackkammer von dem Gaszuführkanal trennenden Trennwand vorgesehen, die so ausgebildet ist, dass sie sich zum Verschließen der Zuführöffnung an einen der Trennwand gegenüberliegenden Wandabschnitt des Gaszuführkanals anlegen kann. Die in der Trennwand vorgesehene Zuführöffnung stellt somit eine besonders einfache Form von Rückschlagventil dar.

Dadurch, dass die Luftsackkammern jeweils ein im Vergleich zur Gesamtgröße des Luftsacks geringes Volumen aufweisen und die Luftsackkammern bei Beaufschlagung durch einen zu schützenden Fahrzeuginsassen zumindest annähernd gasdicht verschließbar sind, ist es erfindungsgemäß auch ohne zusätzliche Maßnahmen zur Abdichtung von Luftsacknähten möglich, während eines vorbestimmten Zeitraums nach dem Aufblasen des Luftsacks einen gewünschten Sollgasdruck in den Luftsackkammern aufrechtzuerhalten, um einen Fahrzeuginsassen auch im Falle eines zweiten Fahrzeugaufpralls bzw. -überschlags wirksam zu schützen.

Aufgrund des vergleichsweise geringen Volumens und der Verschließbarkeit der einzelnen Luftsackkammern kann der Sollgasdruck im Vergleich zu herkömmlichen Luftsäcken außerdem niedriger gewählt werden. Grundsätzlich ist es z.B. möglich, den Sollgasdruck nur geringfügig größer als den Atmosphärendruck zu wählen, da wegen des geringen Volumens der einzelnen Luftsackkammern bereits bei einem solchen Druck ein zum Schutz eines Fahrzeuginsassen ausreichend hoher Gegendruck in einer durch den Fahrzeuginsassen beaufschlagten Luftsackkammer erzeugbar ist.

Im Ergebnis ist durch den erfindungsgemäßen Luftsack also eine erhöhte Federkonstante erreichbar, ohne dass die Nähte des Luftsacks aufwendig abgedichtet werden müssten. Der erfindungsgemäße Luftsack führt bei reduziertem Herstellungsaufwand somit zu einem verbesserten Fahrzeuginsassenschutz. Der Luftsack eignet sich dabei insbesondere für eine Verwendung in einem Dachrahmen-, Kopf-, Kopfvorhang-, Seitenthorax-, Seitenkopfthorax-, Seitenbrustbecken-, Knie- oder Beifahrer-Airbagsystem.

Vorteilhafte Ausbildungen der Erfindung sind den Unteransprüchen, der Beschreibung und der Zeichnung zu entnehmen.

Gemäß einer Ausführungsform ist die Trennwand flexibel ausgebildet, damit sie sich besonders gut an den Wandabschnitt des Gaszuführkanals anschmiegen und dadurch die Zuführöffnung besonders wirksam verschließen kann. Die Trennwand kann aus einem Gewebematerial gebildet sein, beispielsweise aus dem gleichen Material, aus dem auch die Luftsackhülle gebildet ist.

Bevorzugt umfasst der Luftsack eine erste Materiallage, eine zweite Materiallage und eine zwischen der ersten und zweiten Materiallage angeordnete Zwischenlage. Dabei können die erste und zweite Materiallage Abschnitte einer äußeren Luftsackhülle bilden.

Vorteilhafterweise sind die Lagen unter Bildung der Luftsackkammern und des Gaszuführkanals miteinander verbunden, insbesondere vernäht.

Gemäß einer weiteren Ausführungsform ist der Gaszuführkanal durch die erste Materiallage und die Zwischenlage begrenzt. Zu diesem Zweck können die erste Materiallage und die Zwischenlage entsprechend miteinander vernäht sein.

Des Weiteren können die Luftsackkammern durch die zweite Materiallage, die Zwischenlage und die erste Materiallage begrenzt sein. Sind die Luftsackkammern durch die Zwischenlage von dem Gaszuführkanal getrennt, so bildet die Zwischenlage die bereits erwähnte Trennwand. Die Begrenzung der Luftsackkammern nicht nur durch die zweite Materiallage und die Zwischenlage, sondern auch durch die erste Materiallage bedeutet, dass die Zwischenlage geringere Abmessungen als die erste und zweite Materiallage und insbesondere in einer Richtung quer zur Längserstreckung des Gaszuführkanals gesehen eine geringere Ausdehnung aufweist. Dies reduziert zum einen den Querschnitt des Gaszuführkanals, wodurch eine konzentriertere und somit effizientere Gaszufuhr erreicht wird. Zum anderen ist der Materialverbrauch reduziert und der wirtschaftliche Aufwand zur Herstellung des Luftsacks noch weiter verringert.

Im Bereich jeder Luftsackkammer kann eine Öffnung, insbesondere ein Schlitz, in der Zwischenlage vorgesehen sein. Diese Öffnungen bzw.

Schlitze stellen die Zuführöffnungen zum Zuführen von Gas aus dem Gaszuführkanal in die Luftkammern dar, welche - wie bereits erwähnt - nach Art von Rückschlagventilen jeweils verschließbar sind, wenn der Gasdruck in der zugehörigen Luftsackkammer den Gasdruck in dem Gaszuführkanal übersteigt.

Vorteilhafterweise sind benachbarte Luftsackkammern durch eine Trennnaht voneinander getrennt, die einen Abschnitt, welcher die erste und zweite Materiallage miteinander verbindet, einen Abschnitt, welcher die erste Materiallage, die zweite Materiallage und die Zwischenlage miteinander verbindet, und einen Abschnitt, welcher die zweite Materiallage und die Zwischenlage miteinander verbindet, umfasst. Mittels dieser Nahtabschnitte lassen sich die drei Materiallagen des Luftsacks auf besonders einfache Weise derart miteinander verbinden, dass einerseits separate, zumindest annähernd gasdicht voneinander getrennte Luftsackkammern geschaffen werden und andererseits ein Gaszuführkanal ausgebildet wird, der eine besonders effiziente Versorgung der einzelnen Luftsackkammern mit Gas und somit ein besonders schnelles Aufblasen des Luftsacks ermöglicht.

Gemäß einer bevorzugten Ausführungsform sind alle Luftsackkammern des Luftsacks mit einem einzigen Gaszuführkanal verbunden. Dies stellt eine besonders einfache Luftsackkonstruktion dar, die eine besonders wirtschaftliche Herstellung des Luftsacks ermöglicht.

Alternativ ist es jedoch auch möglich, die Luftsackkammern in mindestens zwei Gruppen von Luftsackkammern aufzuteilen, und jeder Gruppe einen eigenen Gaszuführkanal zuzuordnen, welcher die Luftsackkammern der jeweiligen Gruppe zum Aufblasen eines Luftsacks mit Gas versorgt.

In beiden Fällen ist es vorteilhaft, wenn die Luftsackkammern in Längsrichtung des Gaszuführkanals gesehen hintereinander angeordnet sind. Dies ermöglicht nicht nur eine besonders einfache Konstruktion des Gaszuführkanals und somit letztlich des Luftsacks insgesamt, sondern auch eine besonders effiziente Versorgung der Luftsackkammern mit Gas, wodurch der Luftsack besonders schnell aufblasbar ist.

Nachfolgend wird die Erfindung rein beispielhaft anhand einer vorteilhaften Ausführungsform unter Bezugnahme auf die beigefügte Zeichnung beschrieben. Es zeigen:
- Fig. 1: eine Rückansicht eines erfindungsgemäßen Luftsacks in einem entfalteten Zustand während eines Aufblasvorgangs;
- Fig. 2: eine Vorderansicht des Luftsacks von Fig. 1;
- Fig. 3: eine Querschnittsansicht des Luftsacks von Fig. 1 in einem Zustand, in dem Gas aus einem Gaszuführkanal in eine Luftkammer einströmt; und
- Fig. 4: eine Querschnittsansicht des Luftsacks von Fig. 1 in einem Zustand, in dem die Luftkammer gegenüber dem Gaszuführkanal verschlossen ist.

In den Figuren ist ein erfindungsgemäßer Luftsack 10 zum Schutz eines Insassen eines Kraftfahrzeugs in einem vollständig entfalteten Zustand dargestellt. Der Luftsack 10 weist eine flächige, im Wesentlichen rechteckige Grundform auf und eignet sich für eine Verwendung in einem Dachrahmen-, Kopf-, Kopfvorhang-, Seitenthorax-, Seitenkopfthorax-, Seitenbrustbecken-, Knie- oder Beifahrer-Airbagsystem.

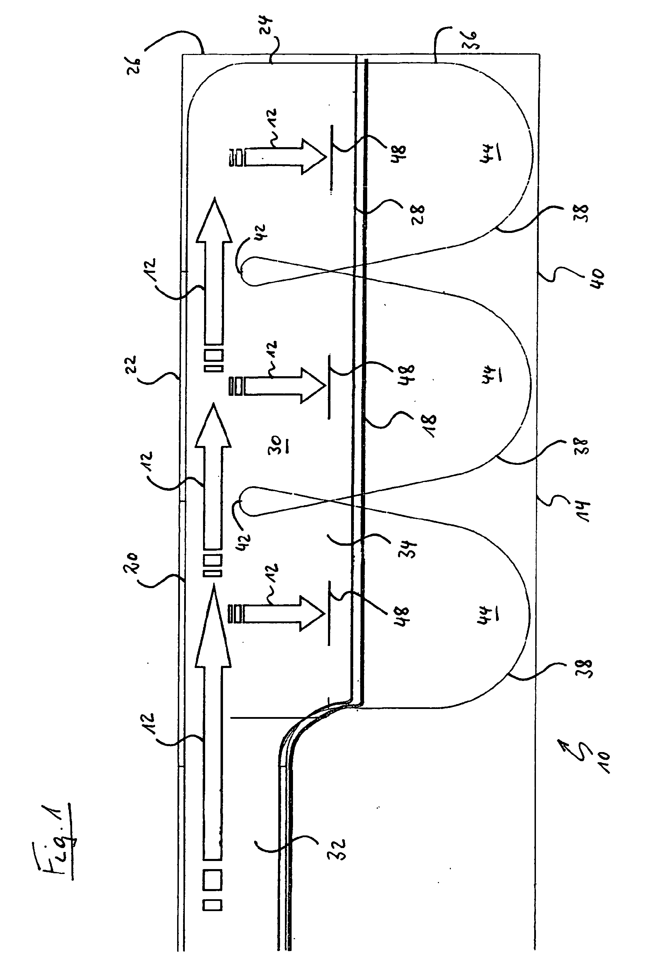

Fig. 1 bis 3 zeigen den Luftsack 10 während eines Aufblasvorgangs, bei dem der Luftsack 10 mit einem durch einen nicht gezeigten Gasgenerator freigesetzten Gas gefüllt wird. Die Strömung des in den Luftsack 10 einströmenden Gases ist durch die Pfeile 12 schematisch angedeutet und wird nachfolgend näher erläutert.

Der Luftsack 10 ist aus einem grundsätzlich bekannten Gewebematerial gebildet und umfasst eine erste Materiallage 14, eine zweite Materiallage 16 und eine zwischen der ersten und zweiten Materiallage 14, 16 angeordnete Zwischenlage 18.

Im dargestellten Ausführungsbeispiel bildet die erste Materiallage 14 einen rückseitigen Luftsackhüllenabschnitt und die zweite Materiallage 16 einen vorderseitigen Luftsackhüllenabschnitt. Dabei ist unter der Vorderseite des Luftsacks 10 diejenige Seite zu verstehen, die bei einem Aufblasen des Luftsacks 10 in einem Kraftfahrzeug in den Fahrzeuginnenraum weist und somit mit dem zu schützenden Fahrzeuginsassen in Kontakt gerät, wohingegen die Rückseite des Luftsacks 10 beispielsweise an eine Karosserie des Fahrzeugs angrenzt.

Die erste Materiallage 14 und die zweite Materiallage 16 sind im Wesentlichen rechteckig und etwa gleich groß ausgebildet. Die Zwischenlage 18 weist dagegen eine mit der ersten und zweiten Materiallage 14, 16 etwa übereinstimmende Länge, aber eine geringere Breite als die erste und zweite Materiallage 14 und 16 auf.

Wie Fig. 1 zeigt, sind die Zwischenlage 18 und die erste Materiallage 14 durch eine Naht miteinander verbunden. Diese Naht umfasst einen ersten Abschnitt 20, der sich im Wesentlichen entlang einer ersten Längsseite 22 des Luftsacks 10 erstreckt, einen aus dem ersten Abschnitt 20 hervorgehenden zweiten Abschnitt 24, der sich im Wesentlichen entlang einer dem Gasgenerator abgewandten Schmalseite 26 des Luftsacks 10 erstreckt, und einen dritten Abschnitt 28, der in einem mittleren Bereich der ersten Materiallage 14 verläuft und überwiegend parallel zum ersten Nahtabschnitt 20 orientiert ist. Sowohl der erste Nahtabschnitt 20 als auch der zweite und dritte Nahtabschnitt 24, 28 verlaufen entlang von Randbereichen der Zwischenlage 18.

Die Zwischenlage 18 und die erste Materiallage 14 begrenzen einen mit dem Gasgenerator verbindbaren Gaszuführkanal 30, der in einem zu dem Gasgenerator weisenden ersten Kanalabschnitt 32 eine geringere Breite als in einem von dem Gasgenerator abgewandten zweiten Kanalabschnitt 34 aufweist.

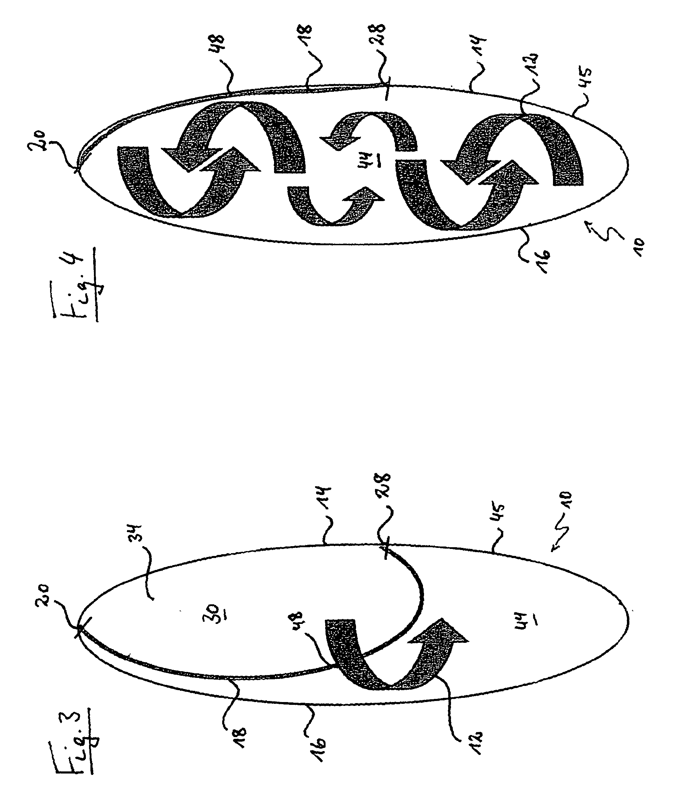

Wie Fig. 3 zeigt, ist der Abstand zwischen dem ersten Nahtabschnitt 20 und dem dritten Nahtabschnitt 28 in dem zweiten Kanalabschnitt 34 kleiner als die Breite der Zwischenlage 18 in dem zweiten Kanalabschnitt 34. Auf diese Weise kann der Gaszuführkanal 30 den in Fig. 3 dargestellten bauchigen Querschnitt annehmen, wenn das durch den Gasgenerator freigesetzte Gas in den Gaszuführkanal 30 einströmt.

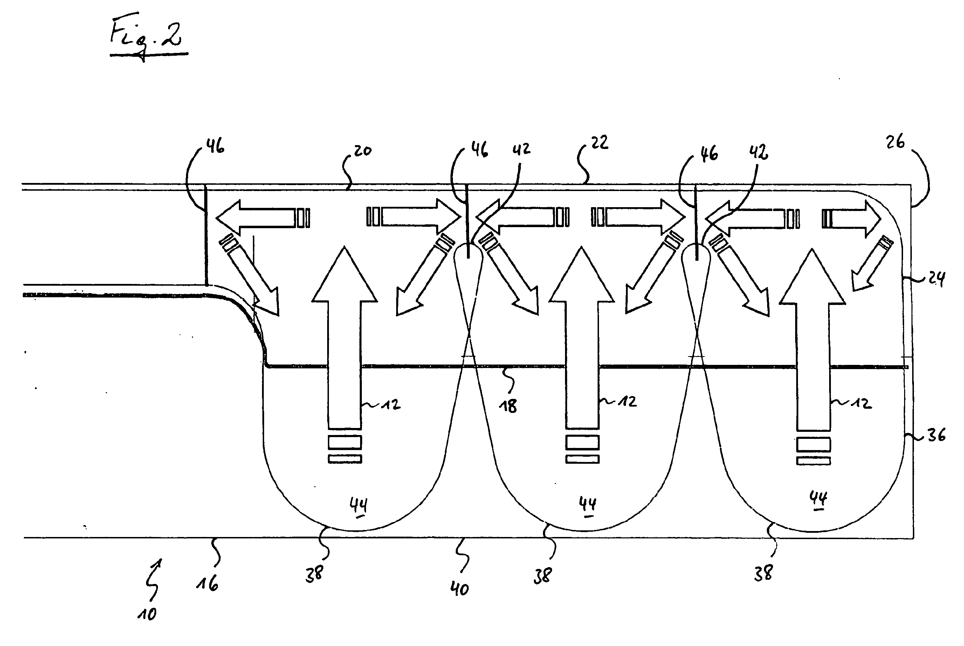

Wie Fig. 1 und 2 zeigen, ist auch die zweite Materiallage 16 mit der ersten Materiallage 14 und der Zwischenlage 16 vernäht. Zu diesem Zweck ist der entlang der ersten Längsseite 22 des Luftsacks 10 verlaufende erste Nahtabschnitt 20 und der daraus hervorgehende entlang der Schmalseite 26 verlaufende zweite Nahtabschnitt 24 vorgesehen. Der erste und zweite Nahtabschnitt 20, 24 verbinden jeweils also alle drei Lagen 14, 16, 18 miteinander.

Ausgehend von der Schmalseite 26 verläuft ein aus dem zweiten Nahtabschnitt 24 hervorgehender vierter Nahtabschnitt 36 schleifenförmig über den Luftsack 10. Der vierte Nahtabschnitt 36 umfasst U-förmige Nahtabschnitte 38, die zur ersten Längsseite 22 des Luftsacks 10 hin offen sind. Die Schenkel der U-förmigen Nahtabschnitte 38 erstrecken sich ausgehend von der der ersten Längsseite 22 gegenüberliegenden zweiten Längsseite 40 des Luftsacks 10 in Richtung der ersten Längsseite 22 und zwar bis über die Hälfte der Breite der Zwischenlage 18 hinaus.

Durch die U-förmigen Nahtabschnitte 38 sind die erste und zweite Materiallage 14, 16 und - soweit sich die U-förmigen Nahtabschnitte 38 über die Zwischenlage 18 erstrecken - alle drei Lagen 14, 16, 18 miteinander verbunden.

Durch die U-förmigen Nahtabschnitte 38 sind separate Luftsackkammern 44 des Luftsacks 10 definiert. Im vorliegenden Ausführungsbeispiel weist der Luftsack 10 drei Kammern 44 auf, die Anzahl der Kammern 44 kann hiervon aber auch abweichen.

Wie Fig. 3 zeigt, ist jede Luftsackkammer 44 durch die zweite Materiallage 16, die Zwischenlage 18 und einen Abschnitt 45 der ersten Materiallage 14 begrenzt. Die Zwischenlage 18 bildet dabei eine Trennwand zwischen dem Gaszuführkanal 30 und den Luftsackkammern 44.

Damit die Luftsackkammern 44 untereinander nicht kommunizieren können, d.h. damit kein Gasaustausch zwischen benachbarten Luftsackkammern 44 stattfinden kann, sind außerdem fünfte Nahtabschnitte 46 vorgesehen, die sich von dem ersten Nahtabschnitt 20 bis zu den schleifenförmigen freien Enden 42 der Schenkel der U-förmigen Nahtabschnitte 38 erstrecken und somit quer zur Längserstreckung des Gaszuführkanals 30 verlaufen.

Ein entsprechender Nahtabschnitt 46 erstreckt sich auch im Bereich des ersten Kanalabschnitts 32 zwischen dem ersten Nahtabschnitt 20 und dem dritten Nahtabschnitt 28, um die dem Gasgenerator am nächsten gelegene Luftsackkammer 44 im Bereich des Gaszuführkanals 30 abzuschließen.

Die fünften Nahtabschnitte 46 verbinden lediglich die zweite Materiallage 16 und die Zwischenlage 18 miteinander (Fig. 2). Die Zwischenlage 18 und die erste Materiallage 14 sind im Bereich der fünften Nahtabschnitte 46 hingegen nicht miteinander vernäht, um entsprechende Durchgänge des Gaszufuhrkanals 30 zu schaffen (Fig. 1).

Durch den ersten Nahtabschnitt 20, den zweiten Nahtabschnitt 24, die U-förmigen Nahtabschnitte 38 und die fünften Nahtabschnitte 46 sind die Luftsackkammern 44 zumindest annähernd gasdicht voneinander getrennt.

Damit das durch den Gasgenerator freigesetzte und in den Gaszuführkanal 30 einströmende Gas, dargestellt durch die Pfeile 12, zum Aufblasen des Luftsacks 10 in die Luftsackkammern 44 eintreten kann, ist im Bereich jeder Luftsackkammer 44 eine schlitzförmige Öffnung 48 in der Zwischenlage 18 vorgesehen (Fig. 1). Die Öffnungen können auch eine von der Schlitzform abweichende Gestalt aufweisen. Des Weiteren können ausgewählten Luftsackkammern oder jeder Luftsackkammer jeweils mehr als eine Öffnung zugeordnet sein.

Wie in Fig. 3 dargestellt ist, strömt das Gas aus dem Gaszuführkanal 30 durch die schlitzförmigen Öffnungen 48 in die Luftsackkammern 44 ein, solange der Gasdruck in dem Gaszuführkanal 30 größer als in den Luftsackkammern 44 ist. Auf diese Weise werden die Luftsackkammern 44 mit Gas gefüllt, bis ein vorbestimmter Sollgasdruck in den Luftsackkammern 44 erreicht ist.

Wird eine Luftsackkammer 44 bei einem Aufprall oder Überschlag eines Kraftfahrzeugs durch ein Körperteil eines zu schützenden Fahrzeuginsassen beaufschlagt, so wird die vorderseitige zweite Materiallage 16 eingedrückt und das Volumen der Luftsackkammer 44 verringert, wodurch sich der Gasdruck in der Luftsackkammer 44 erhöht.

Sobald der Gasdruck in der beaufschlagten Luftsackkammer 44 den Gasdruck in der Gaszuführleitung 30 übersteigt, wird die Zwischenlage 18 so weit in Richtung der ersten Materiallage 14 gedrückt, bis die Zwischenlage 18 an der ersten Materiallage 14 anliegt, wie es in Fig. 4 gezeigt ist. Durch das Andrücken der Zwischenlage 18 an die erste Materiallage 14 wird die der beaufschlagten Luftsackkammer 44 zugeordnete schlitzförmige Öffnung 48 derart verschlossen, dass zumindest während eines sicherheitsrelevanten Zeitraums keine die Schutzwirkung des Luftsacks 10 beeinträchtigende Menge von Gas aus der beaufschlagten Luftsackkammer 44 austreten kann.

Aufgrund des im Vergleich zum gesamten Luftsack 10 geringen Volumens der einzelnen Luftsackkammern 44 und der zumindest annähernd gasdichten Verschließbarkeit der Luftsackkammern 44 kann sich bei einer Beaufschlagung einer Luftsackkammer 44 durch ein Körperteil eines zu schützenden Fahrzeuginsassens nicht nur ein besonders hoher Gegendruck in der beaufschlagten Luftsackkammer 44 aufbauen, sondern der Gegendruck wird auch über einen besonders langen Zeitraum aufrechterhalten. Dadurch ist ein wirksamer Fahrzeuginsassenschutz auch im Falle eines zweiten Aufpralls und/oder zweiten Überschlags des Fahrzeugs gewährleistet.

### Bezugszeichenliste

- 10: Luftsack
- 12: Gasströmung
- 14: erste Materiallage
- 16: zweite Materiallage
- 18: Zwischenlage
- 20: erster Nahtabschnitt
- 22: erste Längsseite
- 24: zweiter Nahtabschnitt
- 26: Schmalseite
- 28: dritter Nahtabschnitt
- 30: Gaszuführkanal
- 32: erster Kanalabschnitt
- 34: zweiter Kanalabschnitt
- 36: vierter Nahtabschnitt
- 38: U-förmiger Nahtabschnitt
- 40: zweite Längsseite
- 42: freies Ende
- 44: Luftsackkammer
- 45: Abschnitt
- 46: fünfter Nahtabschnitt
- 48: Öffnung

## Patentansprüche

1. Luftsack (10) für ein Kraftfahrzeug mit mehreren zumindest annähernd gasdicht voneinander getrennten Luftsackkammern (44) und einem Gaszuführkanal (30) zum Zuführen von Gas zu den Luftsackkammern (44), wobei jede Luftsackkammer (44) durch eine Zuführöffnung (48) mit dem Gaszuführkanal (30) verbunden ist, welche sich selbsttätig verschließt, wenn der Gasdruck einer Luftsackkammer (44) den Gasdruck in dem Gaszuführkanal (30) übersteigt,
**dadurch gekennzeichnet, dass**
jede Zuführöffnung (48) in einer die jeweilige Luftsackkammer (44) von dem Gaszuführkanal (30) trennenden Trennwand (18) vorgesehen ist, die so ausgebildet ist, dass sie sich zum Verschließen der Zuführöffnung (48) an einen der Trennwand (18) gegenüberliegenden Wandabschnitt (14) des Gaszuführkanals (30) anlegen kann.

2. Luftsack (10) nach Anspruch 1,
**dadurch gekennzeichnet, dass**
der Luftsack (10) eine erste Materiallage (14), eine zweite Materiallage (16) und eine zwischen der ersten und zweiten Materiallage (14, 16) angeordnete Zwischenlage (18) umfasst.

3. Luftsack (10) nach Anspruch 2,
**dadurch gekennzeichnet, dass**
die Lagen (14, 16, 18) unter Bildung der Luftsackkammern (44) und des Gaszuführkanals (30) miteinander verbunden, insbesondere vernäht, sind.

4. Luftsack (10) nach Anspruch 2 oder 3,
**dadurch gekennzeichnet, dass**
der Gaszuführkanal (30) durch die erste Materiallage (14) und die Zwischenlage (18) begrenzt ist.

5. Luftsack (10) nach einem der Ansprüche 2 bis 4,
**dadurch gekennzeichnet, dass**
die Luftsackkammern (44) durch die zweite Materiallage (16), die Zwischenlage (18) und die erste Materiallage (14) begrenzt sind.

6. Luftsack (10) nach einem der Ansprüche 2 bis 5,
**dadurch gekennzeichnet, dass**
im Bereich jeder Luftsackkammer (44) eine Öffnung (48), insbesondere ein Schlitz, in der Zwischenlage (18) vorgesehen ist.

7. Luftsack (10) nach einem der Ansprüche 2 bis 6,
**dadurch gekennzeichnet, dass**
benachbarte Luftsackkammern (44) durch eine Trennnaht voneinander getrennt sind, die einen Abschnitt (36, 38), welcher die erste und zweite Materiallage (14, 16) miteinander verbindet, einen Abschnitt (36, 38), welcher die erste Materiallage (14), die zweite Materiallage (16) und die Zwischenlage (18) miteinander verbindet, und einen Abschnitt (46), welcher die zweite Materiallage (16) und die Zwischenlage (18) miteinander verbindet, umfasst.

8. Luftsack (10) nach einem der vorherigen Ansprüche,
**dadurch gekennzeichnet, dass**
alle Luftsackkammern (44) des Luftsacks (10) mit einem einzigen Gaszuführkanal (30) verbunden sind.

9. Luftsack (10) nach einem der vorherigen Ansprüche,
**dadurch gekennzeichnet, dass**
die Luftsackkammern (44) in Längsrichtung des Gaszuführkanals (30) gesehen hintereinander angeordnet sind.

## Claims

1. An airbag (10) for a motor vehicle comprising a plurality of airbag
chambers (44) separated from one another in an at least approximately gastight manner and a gas supply passage (30) for the supply of gas to the airbag chambers (44), wherein each airbag chamber (44) is connected to the gas supply passage (30) by a supply opening (48) which closes automatically when the gas pressure of an airbag chamber (44) exceeds the gas pressure in the gas supply passage (30),
**characterized in that**
each supply opening (48) is provided in a partition wall (18) which separates the respective airbag chamber (44) from the gas supply passage (30) and which is made such that it can lay itself onto a wall section (14) of the gas supply passage (30) disposed opposite the partition wall (18) for the closing of the supply opening (48).

2. An airbag (10) in accordance with claim 1, **characterized in that** the airbag (10) comprises a first material layer (14), a second material layer (16) and an intermediate layer (18) arranged between the first and second material layers (14, 16).

3. An airbag (10) in accordance with claim 2, **characterized in that** the layers (14, 16, 18) are connected, in particular sewn, to one another while forming the airbag chambers (44) and the gas supply passage (30).

4. An airbag (10) in accordance with claim 2 or claim 3, **characterized in that** the gas supply passage (30) is bounded by the first material layer (14) and by the intermediate layer (18).

5. An airbag (10) in accordance with any one of the claims 2 to 4, **characterized in that** the airbag chambers (44) are bounded by the second material layer (16), the intermediate layer (18) and the first material layer (14).

6. An airbag (10) in accordance with any one of the claims 2 to 5, **characterized in that** an opening (48), in particular a slit, is provided in the intermediate layer (18) in the region of each airbag chamber (44).

7. An airbag (10) in accordance with any one of the claims 2 to 6, **characterized in that** adjacent airbag chambers (44) are separated from one another by a separation seam which comprises a section (36, 38) connecting the first and second material layers (14, 16) to one another, a section (36, 38) connecting the first material layer (14), the second material layer (16) and the intermediate layer (18) to one another and a section (46) connecting the second material layer (16) and the intermediate layer (18) to one another.

8. An airbag (10) in accordance with any one of the preceding claims, **characterized in that** all the airbag chambers (44) of the airbag (10) are connected to a single gas supply passage (30).

9. An airbag (10) in accordance with any one of the preceding claims, **characterized in that** the airbag chambers (44) are arranged sequentially when viewed in the longitudinal direction of the gas supply passage (30).

## Revendications

1. Sac gonflable de sécurité (10) pour un véhicule automobile, comprenant plusieurs chambres (44) de sac gonflable de sécurité, séparées de façon au moins à peu près étanche les unes des autres, et un canal d'amenée de gaz (30) destiné à amener du gaz jusque dans les chambres (44) de sac gonflable de sécurité, chaque chambre (44) de sac gonflable de sécurité communiquant avec le canal d'amenée de gaz (30) à travers une ouverture d'arrivée (48) qui se referme automatiquement si la pression régnant dans la chambre (44) de sac gonflable de sécurité dépasse la pression du gaz régnant dans le canal d'amenée de gaz (30),
**caractérisé en ce que**
chaque ouverture d'arrivée (48) est prévue dans une paroi séparatrice (18) qui sépare la chambre de sac gonflable de sécurité correspondante (44) du canal d'amenée de gaz (30) et est configurée de manière telle que, pour fermer l'ouverture d'arrivée (48), elle puisse se plaquer sur une partie de paroi (14) du canal d'amené de gaz (30), qui est opposée à la paroi séparatrice (18).

2. Sac gonflable de sécurité (10) selon la revendication 1,
**caractérisé en ce que**
le sac gonflable de sécurité (10) comporte une première couche de matière (14), une deuxième couche de matière (16), et une couche intermédiaire (18) disposée entre les première et deuxième couches de matière (14, 16).

3. Sac gonflable de sécurité (10) selon la revendication 2,
**caractérisé en ce que**
les couches (14, 16, 18) sont reliées, en particulier cousues entre elles, en formant les chambres (44) de sac gonflable de sécurité et le canal d'amenée de gaz (30).

4. Sac gonflable de sécurité (10) selon la revendication 2 ou 3,
**caractérisé en ce que**
le canal d'amenée de gaz (30) est délimité par la première couche de matière (14) et la couche intermédiaire (18).

5. Sac gonflable de sécurité (10) selon l'une des revendications 2 à 4,
**caractérisé en ce que**
les chambres (44) de sac gonflable de sécurité sont délimitées par la deuxième couche de matière (16), la couche intermédiaire (18) et la première couche de matière (14).

6. Sac gonflable de sécurité (10) selon l'une des revendications 2 à 5,
**caractérisé en ce que**
une ouverture (48), en particulier une fente, est prévue dans la couche intermédiaire (18) au niveau de chaque chambre (44) de sac gonflable de sécurité.

7. Sac gonflable de sécurité (10) selon l'une des revendications 2 à 6,
**caractérisé en ce que**
des chambres de sac gonflable de sécurité contiguës (44) sont séparées les unes des autres par une ligne de joint séparatrice qui comprend une partie (36, 38) reliant les première et deuxième couches de matière (14, 16) l'une à l'autre, une partie (36, 38) reliant la première couche de matière (14), la deuxième couche de matière (16), et la couche intermédiaire (18) les unes aux autres, et une partie (46) qui relie la deuxième couche de matière (16) et la couche intermédiaire (18) l'une à l'autre.

8. Sac gonflable de sécurité (10) selon l'une des revendications précédentes,
**caractérisé en ce que**
toutes les chambres de sac gonflable de sécurité (44) du sac gonflable de sécurité (10) communiquent avec un seul canal d'amenée de gaz (30).

9. Sac gonflable de sécurité (10) selon l'une des revendications précédentes,
**caractérisé en ce que**
les chambres (44) de sac gonflable de sécurité sont disposées les unes derrière les autres, vues dans le sens longitudinal du canal d'amenée de gaz (30).
